(19) Europäisches Patentamt / European Patent Office / Office européen des brevets

(11) **EP 3 664 107 A1**

(12) **EUROPEAN PATENT APPLICATION**

(43) Date of publication:
**10.06.2020 Bulletin 2020/24**

(51) Int Cl.:
*H01F 3/10* (2006.01)          *H01F 30/06* (2006.01)
*H02K 53/00* (2006.01)

(21) Application number: **18075016.8**

(22) Date of filing: **07.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Tran, Cong Toan**
**1445 CE Purmerend (NL)**

(72) Inventor: **Tran, Cong Toan**
**1445 CE Purmerend (NL)**

(54) **TRAN ELECTROMAGNETIC GENERATOR**

(57)     A time-varying current from a D.C. high voltage-source, that flows through a primary coil of winding of a magnetic circuit containing embedded permanent magnets, to a D.C. low voltage source, induces more inductive voltages across different coils of winding. The windings are wrapped around the main-,sub-magnetic paths of different configurations and constructions of the Tran-electromagnetic generator.

The invention, when combined with one of or all of:
- Recovering the utilized electric energy;
- Using (hybrid) soft magnetic wires, in place of copper magnet wire in secondary winding or subordinate secondary winding, if it is possible;
- Using high magnetic permeability, high magnetic saturation soft magnetic materials;
- Arranging as many as possible, high energy permanent magnets in main magnetic circuit+
- Applying Voltage-Doubler circuits or Center-tapped in secondary winding;
- Accelerating the speed of magnetic field collapse in primary coil of winding;
- Recharging the battery with high voltage electric charge, through primary coil of winding of an transformer makes the Tran-electromagnetic generator efficient.

FIG.4A

## Description

FIELD OF THE INVENTION

The present invention relates to principles as:

Reusing the used electric energy;

Using time-varying magnetic flux from primary coil of winding to block or to cross the magnetic flux from permanent magnets, embedded in main magnetic circuits, resulting in generating electric energy through coils of winding wrapped around the main-; the subordinate magnetic cores;
And methods:

- Recovering of electric charge, utilized to energize primary winding and optionally, recovering of electric energy supplied to all instruments of the Tran-electromagnetic generator;
- Regaining electric energy, store in primary winding, when magnetic field in the primary winding collapsed or when magnetic flux of permanent magnets - embedded in main magnetic circuits - from subordinate (sub-) magnetic circuit, returned to the main magnetic circuit.
- Harvesting electric energy from secondary coils of winding, from sub- (subordinate) secondary coils of winding, when magnetic flux in primary coil of winding changed or when magnetic flux from permanent magnets flow through the coils of winding, in order to make a closed magnetic circuit in main magnetic path.
- Reducing numbers of (active) synchronous diodes by applying Voltage-Doubler circuits or Center-tapped coils of winding;
- Arranging as many as possible, permanent magnets in main magnetic path;
- Making the collapse of magnetic field in primary coil of winding faster;
- Generating electric energy, during the time of transferring high-voltage electric charge-stored on appropriate capacitors in electric circuits of coils of winding- to a selected battery.

MEANING OF WORDS, USED IN THE APPLICATION

Main magnetic path (core) : contains primary, secondary coils of winding and embedded permanent magnets; keeps magnetic flux of permanent magnets flowing originally in this path, if no presence of magnetic flux from primary coil of winding.

Subordinate (sub-) paths are disconnected with the main magnetic path by air-gaps; keep magnetic flux of permanent magnets flowing in the sub-magnetic paths, when the main magnetic path is occupied by magnetic flux from the energized primary coil of winding.

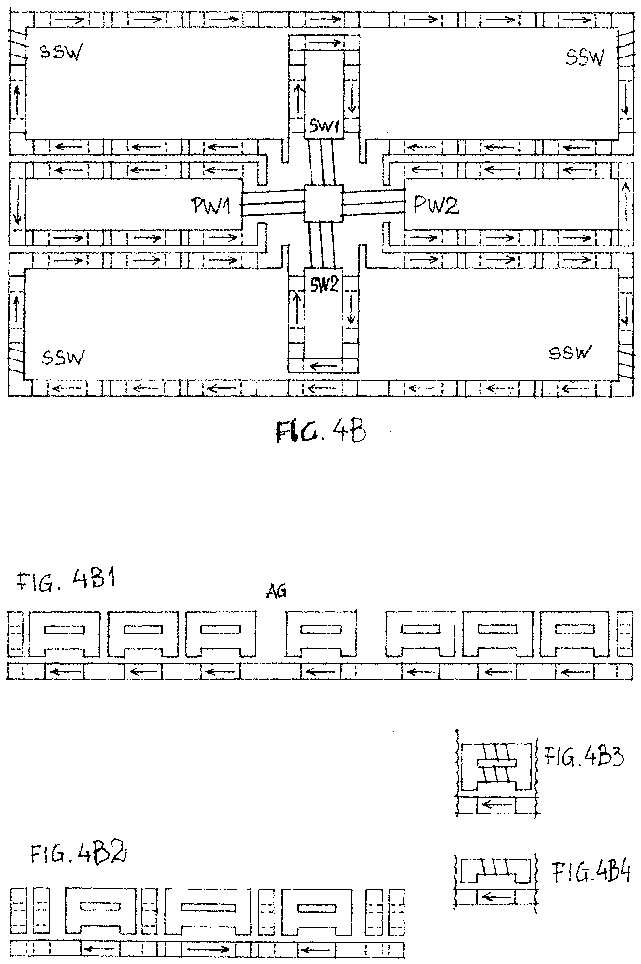

Sub-secondary voltages : come from sub-secondary coils of winding, those are wrapped around the sub-magnetic paths, with the exception of magnetic circuits in FIG. 4B - 4C.

Electronic switches, used to switch electric current ON-OFF, in the electric circuits, have preferably, no intrinsic diodes.

In all figures, the following symbols denote :

- : Permanent magnet with South pole → North pole;

- : magnetic circuit with embedded permanent magnets;

- : coil of winding;

- : VR : voltage rectifier, it can be full-wave bridge rectifier with (active) synchronous diodes or Voltage-Doubler circuit or Center-tapped (sub-) secondary coils of winding;

- ES : electronic switch;

- AG : air-gap;

- PW : primary coil of winding;

- SW: Secondary coil of winding;

- SSW : Sub-secondary coil of winding;

- B : battery;

- C : Capacitor;

- D : diode or ideal diode or active synchronous diode or MOSFET controller;

- R : resistance;

- T : transformer;

- MCU : Micro- Controller Unit.

BACKGROUND ART

The Principle of the Tran-energy machines US 835,654 (WO 2009/112877 with PCT number PCT/IB200800796) and US 2017/0221627 which are incorporated herein by reference, describes the principles in the recovery of electric energy, derived from the energized primary winding after producing the desired work, and harvesting the electric energy from secondary winding, sub-secondary windings by increasing and decreasing in magnetic flux of primary winding during energizing and de-energizing in primary coil of winding.

EP 2 978 119 A1 and US2017/0221627 A1, which are incorporated herein, describe methods and circuits for capturing electric energy, utilized in energized coils with capacitors and utilizing the capacitors as part of a voltage source to energize the coils.

Electric circuit of primary coil of winding has two electronic switches, one at high-side, the other is at low-side+

Utilizing a time-varying current to build up a changing magnetic field in primary coil of a transformer that contains embedded permanent magnets in its magnetic path. The changing magnetic field can :

> 1- [0018] Induce an inductive voltage across a secondary coil of winding on the main magnetic path;
> 2- [0019] Interact with another magnetic field to perform desired works, there are two methods of interactions between electromagnetic field and magnetic field from permanent magnet. That is blocking the magnetic path of permanent magnets or crossing the magnetic path of permanent magnets by magnetic flux from the energized primary coil of winding;
> 3- [0020] By interaction between magnetic flux, magnetic flux of permanent magnet springs over air-gap to a subordinate (sub-) magnetic path (less reluctance than air- path, along the length of permanent magnet), therefore sub-secondary voltages appear across the sub-secondary coils of winding.

When the magnetic field in primary coil of winding is collapsed, the energy of collapsed magnetic field can be regained via a full-wave bridge rectifier, also as the energy from secondary coil of winding and sub-secondary coils of winding, when magnetic flux of permanent magnets return to the main magnetic path.

In R-L, or R-C or R-L-C circuits, at D.C. voltage-source, when switching ON respectively OFF, the current does not reach its desired amperes immediately, respectively zero ampere, but needs a short duration of time to change its value.

In R-L circuits, energy stored by an inductor is:

$$W(t) = \{ L \cdot I^2(t) \}/2$$

Where W is in Joules, L is in Henries and I is in Amperes .

This formula implies that more energy can be obtained with the same electric current by greater value of inductance L.

When the D.C. voltage- source is disconnected to the primary coil of winding- via high side and low side switches- the energy, stored in the primary coil of winding can be drained away faster by adding suitable value of electrical resistance or by suitable transformer(s) (including the auto-transformer), according to the equation:

$$\tau = L / R$$

$\tau$ : the time constant of the RL circuit, in second

L is the inductance of the primary coil of winding, in Henry ;

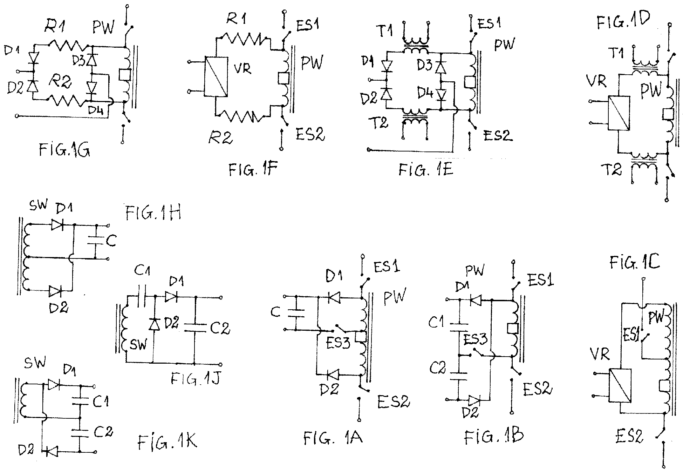

R, in ohm, is the total electrical resistance of the electric circuit that is used to drain away magnetic energy, stored in primary coil of winding . See FIG. 1A - 1G, in case of FIG. 1A - 1C, an extra electronic switch ES3 needed in order to prevent electric current flows to undesired direction;

Magnetic flux from embedded permanent magnets in main magnetic path, dislodges the collapsed magnetic field in primary coil of winding faster.

Changing current causes changing magnetic flux, with the changing magnetic flux in primary coil of winding:

- An inductive voltage appears across secondary coil of winding;
- Magnetic flux from permanent magnets seeks automatically an another magnetic path (sub-magnetic path - high permeability) with low magnetic resistance. It springs over air-gap in sub-magnetic path. Therefore, more inductive voltages appear across sub-secondary coils of winding on sub magnetic path.

High voltage electric charge can be formed and stored in suitable capacitor(s) or using Voltage-Doubler circuit or Center-Tapped circuit. With these high-voltage electric charges, the selected voltage-source can be recharged by three ways:

> 1- [0028] Directly connected with the electric poles of the voltage-source or via an electronic switch to control the order of charging;
> 2- [0029] Through a primary coil of winding of a transformer via electronic switches at High-Side and Low-Side of the electric circuit, low-side of the transformer is connected with the positive pole of the selected voltage-source. Inductive voltage from the secondary coil of winding can also be used to recharge this voltage-source;
> 3- [0030]The capacitor with high-potential electric charge is connected in series with an another voltage-source of suitable voltage level. The in series voltage- sources is connected - via electronic switches-, at high-side, with a primary coil of winding of a transformer that contains permanent magnets in its main magnetic path, and at low-side, with the positive electric pole of the selected voltage-source (battery).

When high-side and low-side switches are ON in a predetermined time, a desired time-varying current flows through the primary coil of winding to charge the low voltage battery in cascade, at the same time, it induces the inductive voltages across all windings, related with the changing magnetic field of the primary coil of winding.

When high-side and low-side switches are OFF, electric energy, derived from changing magnetic fields in all windings flow to the appropriate capacitors, stored there and ready for the next transferring. The working of no voltage -drop full-wave bridge rectifier or the voltage-doubler are not described here.

With two electronic switches, preferably without intrinsic body-diode, at high-side and low-side, in OFF position, the primary coil of winding becomes an isolated voltage-source when regaining electric energy from collapsed magnetic field or from the coming of magnetic field from permanent magnets, related with the primary winding

Direction of magnetic flux of permanent magnets, embedded in main magnetic path, can be deflected by interaction with changing magnetic flux of primary coil of winding. Owing to this, more inductive voltages appears across coils of winding, wrapped around the main magnetic core, the sub-magnetic cores. Therefore more electric energy can be harvested.

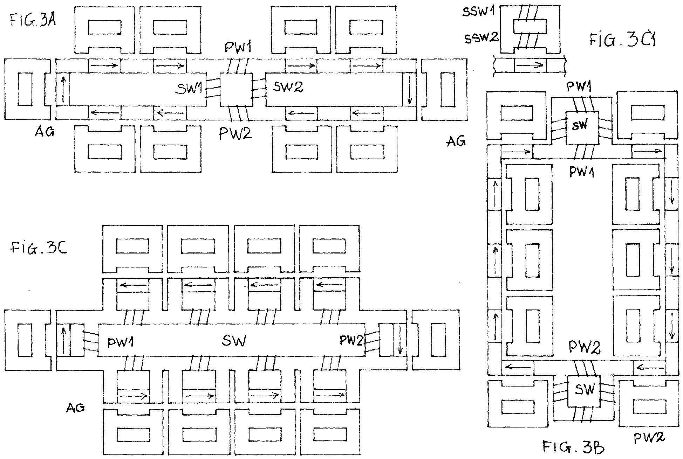

There are two methods of magnetic interactions, one is blocking, magnetic flux from energized primary coil of winding blocks the normal magnetic path of all permanent magnets, connected in series through soft magnetic material, or each of apart magnet placed parallel with main magnetic path, see FIG. 3C ;

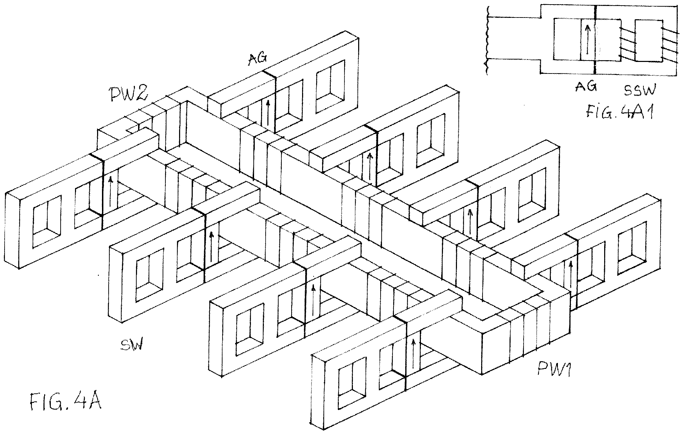

Two is crossing, magnetic flux of energized primary coil of winding crosses the magnetic flux of permanent magnets. See FIG. 4A - 4C .

For electronic switches, determination of timing ON and OFF in order to energize and de-energize the primary winding is essential. ON time is long enough to build up a desired changing magnetic flux in primary coil of winding. OFF time is long enough for regaining electric energy, stored in primary coil of winding, for harvesting electric energy, stored in secondary and sub-secondary coils of winding. These winding are related with the changing magnetic field in primary coil of winding.

Magnetic circuit with embedded permanent magnets has a proper time-constant, depending on quality and quantity of permanent magnets also as the arrangements of permanent magnets in main magnetic path.

Soft magnetic materials with high magnetic permeability, high magnetic density, low coercive force, low magnetostriction, no magnetic residue, can be used as magnetic wires in secondary winding and sub-secondary winding. A multi-strand magnetic wires, combined of the above-mentioned soft magnetic wires and copper magnetic wires, or specially, magnetic wires, made of soft magnetic material clad copper wire can be used as magnetic wires to reduce the electric resistance and increase the strength of magnetic fields.

SUMMARY OF THE INVENTION

The present invention relates to principles and methods to make an integrated energy conversion device by combinations of :
Arranging permanent magnets in magnetic circuits and arranging batteries in cascade through magnetic circuits and instruments

- Interacting between magnetic flux from high energy permanent magnets, (embedded in series- with soft magnetic material as intermedium-) and magnetic flux from energized primary coil of winding, in main magnetic path;
- Using a time-varying current to build up a changing magnetic field in primary winding of a transformer containing permanent magnets in its magnetic core. The changing magnetic field can:

    interact with magnetic field from permanent magnets, in order to deflect the direction of magnetic flux of permanent magnets from main magnetic core to sub-magnetic cores. When this changing main magnetic field is collapsed, then: magnetic flux from permanent magnets flow in main magnetic path again. With the coming and going of magnetic flux from permanent magnets, inductive voltages appear across all coils of windings, related with it.

The electric energy with high voltage,- after releasing potential energy in primary coil of winding, in instruments, to perform desired works,- flows in the low-voltage battery. This energy can be reused to perform desired works .

The above-mentioned electric energy, together with electric energy that is supplied to instruments, make the low voltage battery in cascade, time after time, higher, with all its consequences that the system is stopped, when voltages of the two batteries in cascade, is equal.

The receiving electric energy from low-voltage battery in cascade, can be used to:

    provide electric energy for another magnetic circuit containing embedded permanent magnets;

    combine with high voltage electric charge, stored in appropriate capacitor(s) to recharge the selected battery via another magnetic circuit containing embedded permanent magnets;

    combine with another batteries to form a new system of cascade batteries with magnetic circuit containing embedded permanent magnets.

Electric energy, derived from changing magnetic fields, via rectifier - or Voltage-Doubler or Center-Tapped system is stored on, for example, an appropriate capacitor, the voltage of the capacitor becomes higher and higher after every pulsed charge. Even so, the whole system works as usual.

The number of turns on secondary, sub-secondary coils of winding can be minimized, while the desired high voltage across the suitable capacitor is obtained with or without Voltage-Doubler cicuit or Center-Tapped circuit.

Applications of Voltage-Doubler circuits or Center-Tapped circuits increase voltage of electric charge and reduce 50% of number of (active, synchronous) diodes in full-wave bridge rectifier circuits.

All electric energy, stored in appropriate capacitors, possess high voltage level. During the predetermined time in transferring electric energy to the desired battery, the high voltage electric charge can, via high-side and low-side electronic switches, flow through the primary coil of winding (with or without embedded permanent magnet in its main magnetic path) to the positive electric pole of the desired battery. At the same time, electric energy appears across secondary/sub-secondary coils of winding.

So long as the magnetic field in primary coil of winding increases or so long as the current flowing in primary coil of winding does not reach its maximum value and all electric energy, derived from collapsed magnetic field in primary winding is stored, then there is no raising in temperature in primary coil of winding, also as in secondary and sub-secondary coils of winding.

From [0052] until [0056] are the fundamental factors for a DC - DC Converter.

Electric energy, derived from sub-secondary coils of winding, by deflection of magnetic flux from permanent magnets, embedded in main-magnetic path, caused by the changing magnetic field in primary coil of winding of magnetic circuit containing embedded permanent magnets, are the enhanced factors of efficiency.

Briefly, the Tran-electromagnetic generator consists of:

- Two or more magnetic circuits containing embedded permanent magnets, in each magnetic circuit, equipped with switches at high-side and low-side.

- A system of batteries in cascade through the above-mentioned magnetic circuit and electric instruments. The high- voltage battery provides electric energy, in a predetermined time, via switches at high-side and low-side to the primary coils of winding of the above-mentioned magnetic circuit.

- The supplied electric energy, derives from high-voltage battery, releases its potential energy through the primary coil of winding of magnetic circuit containing embedded permanent magnets and instruments to perform desired works, finally, charges the low-voltage battery. The more electric energy supplies to magnetic circuits and instruments to perform desired works, the more electric energy can be gathered in low-voltage battery for reusing to perform works again.(Another method for electric generator).

The energized primary coil of winding induces a desired changing magnetic field in order to:

- induce an inductive voltage, across the secondary coil of winding;

- deflect the direction of magnetic flux from permanent magnets between main magnetic path and sub-magnetic cores. Accordingly there are more inductive voltages across the sub-secondary windings. The more permanent magnets arranged in magnetic circuit(s), the more sub-secondary inductive voltages arisen.

All electric energy, derived from primary winding, secondary/sub-secondary windings can be :

- charged directly to the selected battery;

- stored in appropriate capacitors to form high-voltage electric charge;

- flowed through Voltage-Doubler circuit or Center-Tapped circuit, and if needed, stored in appropriate capacitors to form high voltage electric charge.

High-voltage electric charge can be used (or connected in series with another suitable voltage battery) to energize another magnetic circuit containing embedded permanent magnets, simultaneously with charging the selected battery.

The more magnetic circuits containing embedded permanent magnets and the more batteries in cascade through the above-mentioned magnetic circuits, then the more electric energy can be generated.

Power batteries, suitable capacitors, best soft magnetic cores, high energy permanent magnets, coils of windings, made from or high electric conduction magnet wires or high permeability magnet wires or hybrid magnet wires, electronic switches, a Micro -Controller Unit and assembly materials. That is a Tran electromagnetic generator.

DESCRIPTION OF THE DRAWINGS

FIGS 1A - 1G show modified electric circuits of primary coil of winding, the modification can drain energy from collapsed magnetic field away faster.

FIG .1A is schematic view of center-tapped primary coil of winding with embedded permanent magnets, when ES1, ES2 are ON, ES3 is OFF, to prevent the undesired electric current flowing to capacitor C.

FIG. 1B is schematic view of primary coil of winding with embedded permanent magnets and Voltage-Doubler circuit, when ES1, ES2are ON, ES3 is OFF, to prevent electric current flowing to capacitors C1, C2.

Permanent magnets, embedded in the primary coil of winding make the time-constant smaller.

FIG. 1C is schematic view of primary coil of winding with embedded permanent magnets. Greater resistance can drain the collapsed magnetic field away faster.

FIG. 1D - 1E is schematic views of primary coil of winding with ]voltage rectifier VR or between the (active, synchronous) diodes of voltage rectifier VR. Resistances of the transformer make the time-constant smaller. Moreover, with what extra energy from the secondary coil of winding.

In FIG. 1F - 1G, in place of transformers, the resistance R1, R2 make time-constant smaller

FIG. 1H - 1K are schematic views of center-tapped and voltage-doubler circuit, the electric circuits make voltage of electric charge higher.

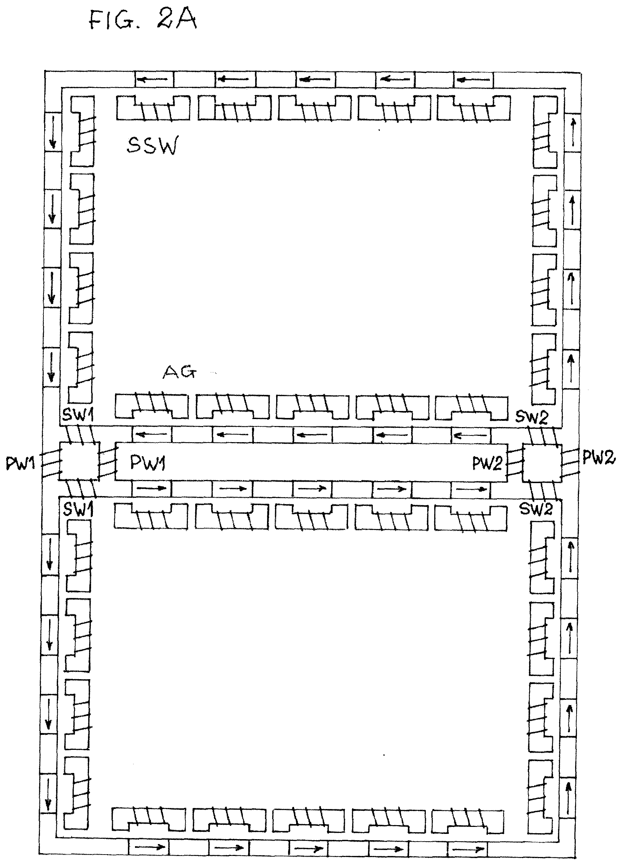

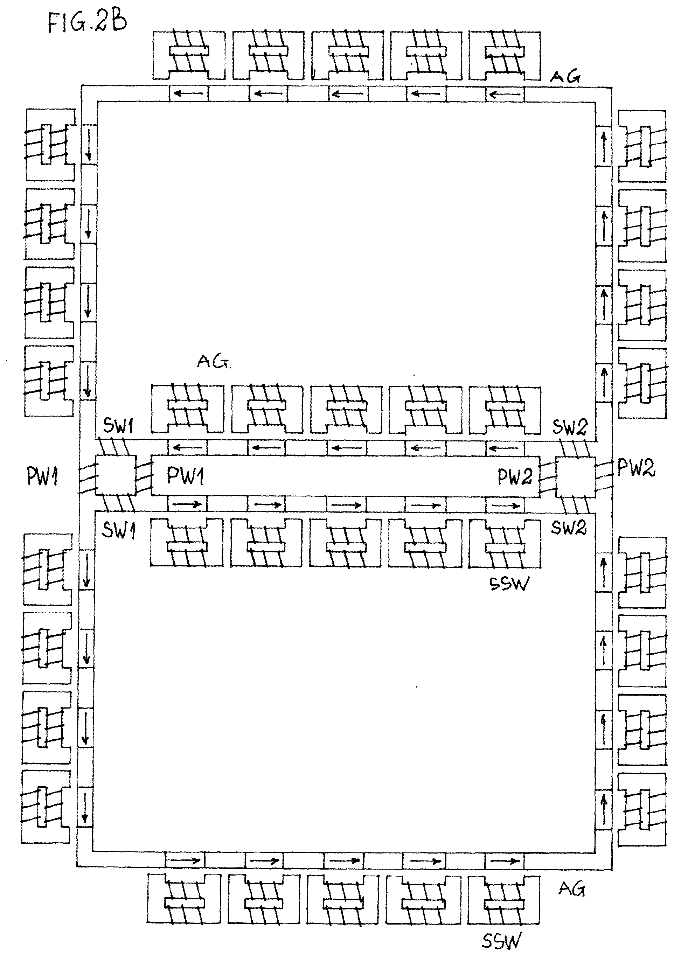

[0076 FIG. 2A - 2B are schematic views of models of the Tran electromagnetic generator. Each magnetic circuit is embedded with thirty-six permanent magnets, two primary windings and two secondary windings. There are thirty-six sub-secondary windings on sub-magnetic path in FIG. 2A. When the PW1, PW2 are energized, the changing magnetic fields from the PW1, PW2:

-   induce an inductive voltages across the secondary windings;

-   block the flow of magnetic flux from all permanent magnets. To make a closed magnetic loop, magnetic flux from each permanent magnet springs over air-gap, into the sub-magnetic path, therefore, a sub-secondary voltage appears across the sub secondary winding;

FIG. 2B is schematic view of Tran electromagnetic generator, with seventy-two sub-secondary coils of winding for each of thirty-six permanent magnets, embedded in the main magnetic circuit.

FIG. 3A - 3C1 is schematic view of models of the Tran electromagnetic generator, wherein, the places of primary coils of winding, secondary coils of winding are different with their places in FIG. 2A -2B.

From FIG. 2A to FIG. 3B, magnetic flux from energized primary coils PW1, PW2 blocks the path of all magnets, connected in series through soft magnetic core. The inductive voltage across secondary coils of winding is depend mostly on the changing magnetic -the energized primary coils of winding.

In FIG. 3C, magnetic flux from energized primary coils of winding PW1, PW2 dislodges magnetic flux from each of permanent magnets out of the magnetic path of secondary coils of winding. In this case, the inductive voltages across secondary coils of winding are depend, not only on the changing magnetic field from energized primary coils of winding, but also on the coming and going of magnetic flux from a permanent magnet.

FIG. 4A - 4A1 are schematic views of an aspect of the Tran electromagnetic generator. The magnetic flux from the energized primary winding induces directly inductive voltages across secondary windings, simultaneously cross magnetic flux from permanent magnets. Accordingly, magnetic flux from permanent magnets spring over air gap in sub - magnetic path. Subsequently, there are sub- secondary voltages appear across the sub-secondary coils of winding. FIG. 4A1 is schematic view of sub-secondary coil of winding. More permanent magnets can be arranged in this construction.

FIG. 4B - 4B4 are schematic views of another aspect of the Tran electromagnetic generator, wherein, magnetic flux of energized primary windings PW1, PW2 cross magnetic flux from three different magnetic circuits containing embedded permanent magnets. In this model, sub-secondary windings are wrapped around the main magnetic path. FIG. 4B, 4B1, 4B2 are schematic top view, front view and side view, respectively. The inductive voltages across the secondary coils of winding are depend on the changing magnetic fields from energized primary winding and subsequently from the changing magnetic field from permanent magnets.

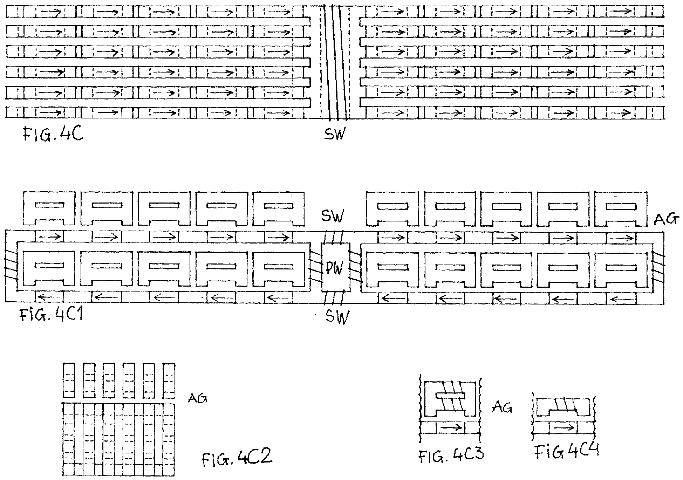

FIG.4C - 4C4 are schematic view of another aspect, wherein many permanent magnets are arranged in different magnetic circuits. Magnetic flux from permanent magnets are crossed by magnetic flux from the energized primary coil of winding. Inductive voltages across the secondary windings are partly depend on the changing magnetic field from energized primary windings, partly from the changing magnetic flux from permanent magnets. FIG. 4C, 4C1, 4C2 are schematic top view, front view and side view, respectively. FIG. 4C3, 4C4 are schematic view of sub-secondary coils of winding.

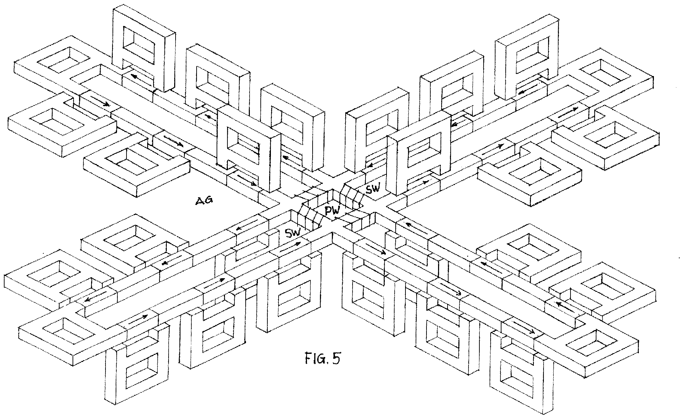

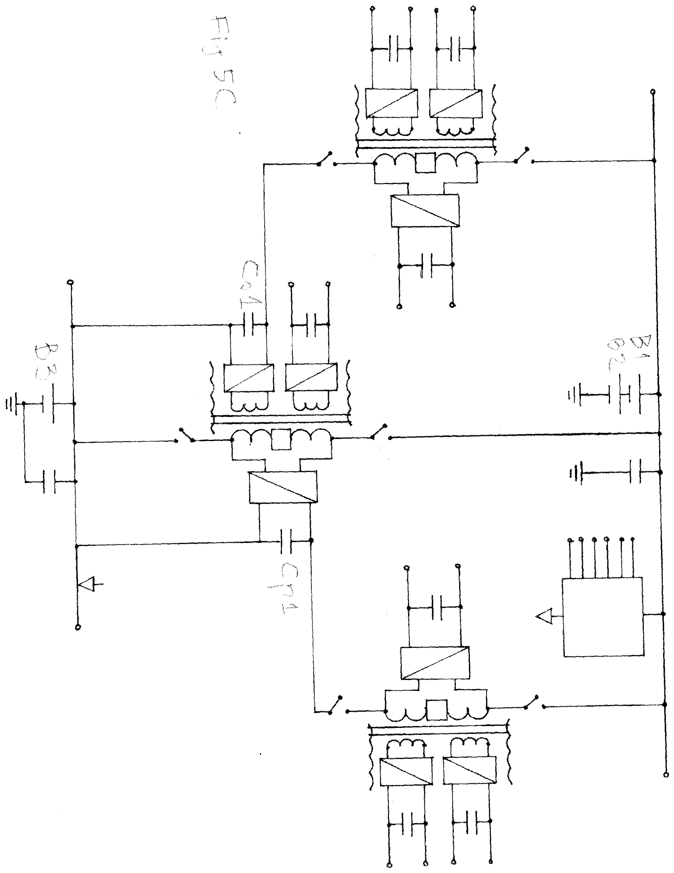

FIG. 5 is a perspective schematic view of Tran electromagnetic generator. The primary, secondary coils of windings are in the center. For sake of clarity, all sub-secondary coils of winding are separately drawn far from each other. The sub-secondary windings are not mentioned here.

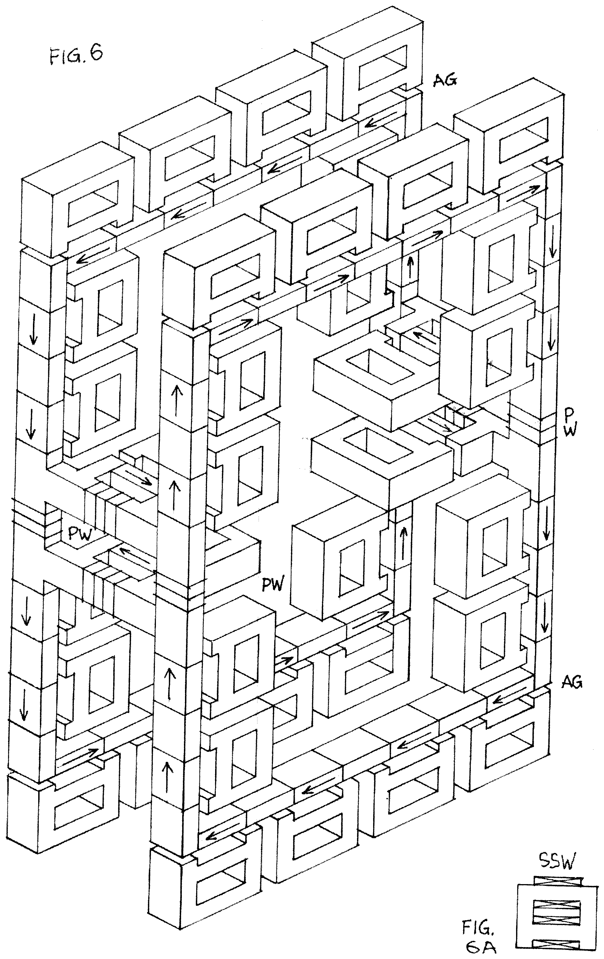

FIG. 6 - 6A is another aspect of schematic view of Tran-electromagnetic generator with two layers, contacted with each other by two primary coils of winding. It consists of thirty-six permanent magnets with seventy-two sub-secondary coils of winding. FIG. 6A is a schematic view of sub-secondary coils of winding.

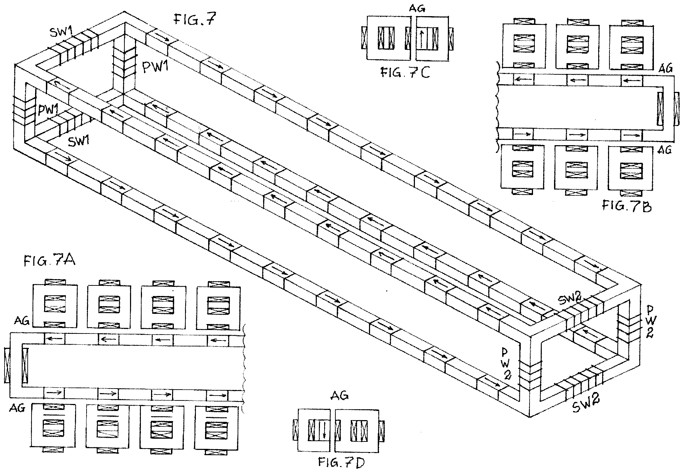

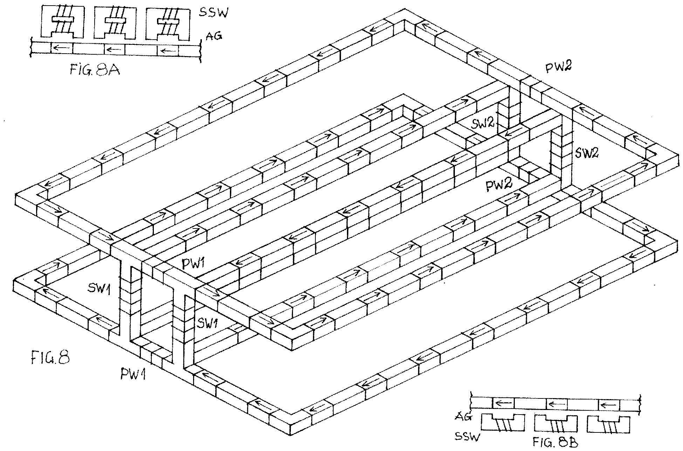

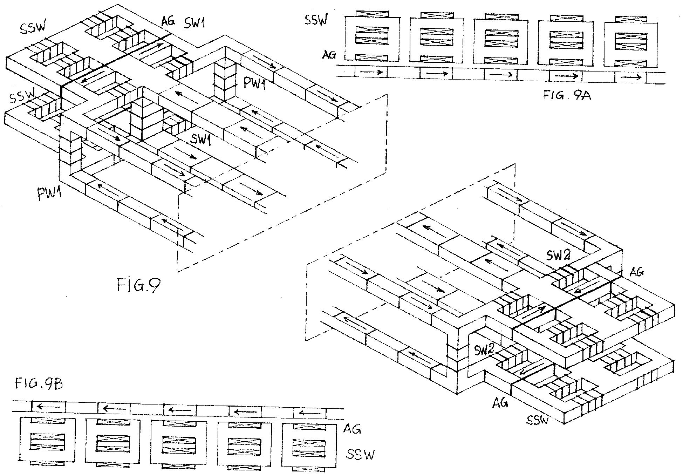

FIG. 7 - FIG. 9B are the schematic view of different structures of Tran/electromagnetic generators. Just energize two primary coils of winding, then all permanent magnets respond with electric energy from sub-secondary coils of winding together with energy from two secondary windings. The figures of sub-secondary coils of winding are not mentioned here.

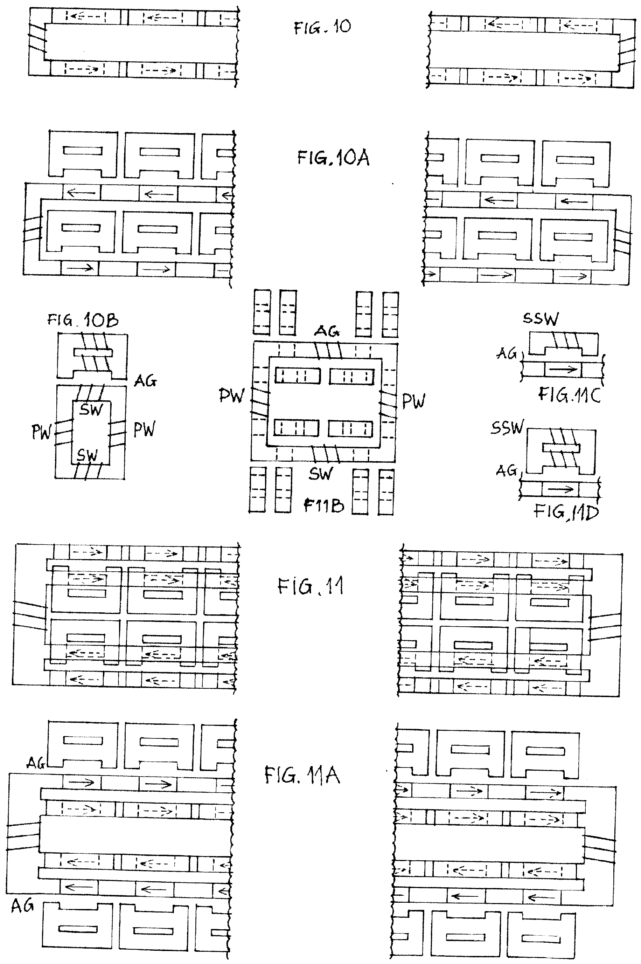

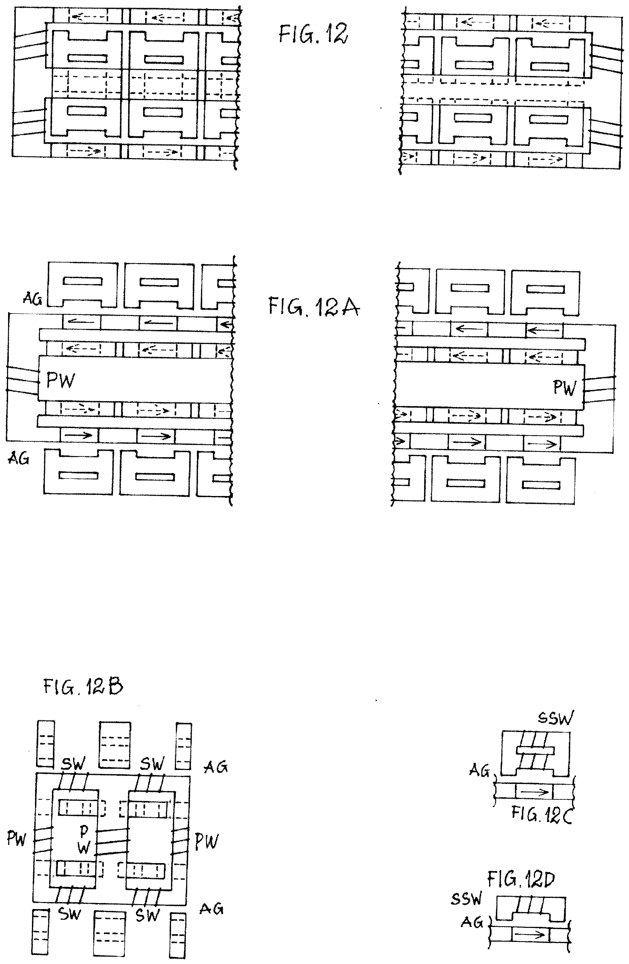

FIG. 10 - FIG. 12D are schematic views of Tran electromagnetic generator with multilayer. FIG. 10 FIG. 11 - FIG. 12 are schematic top views+ FIG. 10A - FIG. 0011A -FIG. -12A are schematic front views, FIG. 10B -FIG. 11B-FIG. 12B are schematic side views. Another FIG. are wel known, from sub-secondary coils of winding.

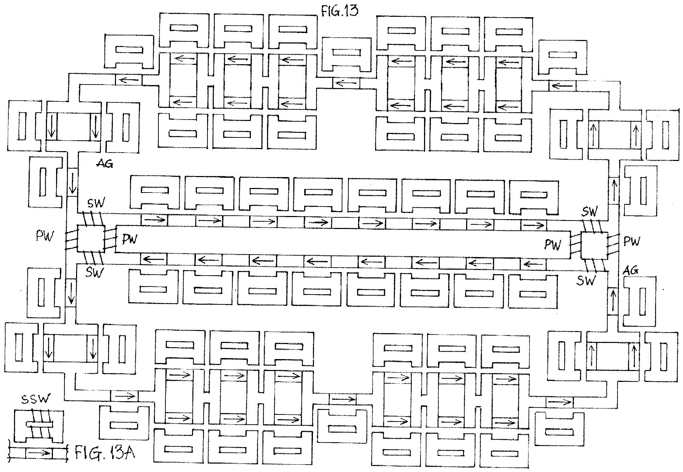

FIG. 13 show a schematic view of another aspect of the Tran electromagnetic generator. At some place, there are two permanenr magnets in parallel. Because the magnetic path is made of very high magnetic density materials. Just supply electric energy to two primary windings, then one hundred and twenty -four sub-secondary coils of winding respond with energy from sixty-two permanent magnets, together with electric energy from two secondary coils of winding. FIG. 13A is schematic view of sub-secondary oil of winding.

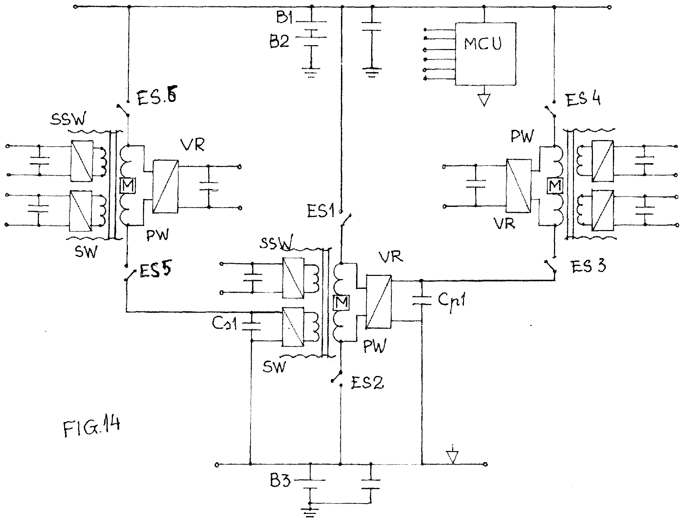

FIG. 14 shows the electric circuit of a magnetic circuit containing embedded permanent magnets. High voltage energy from two batteries, in series B1 + B2, is supplied to the primary winding (first pulse) via high-side electronic switch ES1 and low-side switch ES2, the high potential electric energy, after releases its potential energy in primary winding, charges battery B3. In primary winding, high-potential energy is turned into magnetic flux, that works again magnetic flux from permanent magnet, therefore magnetic flux from permanent magnets spring over air-gaps, to flow in sub-magnetic paths. The changing magnetic flux in sub-magnetic path induces an inductive voltage, energy from inductive voltage, stored on sub-secondary capacitor. When two electronic switches, ES1, ES2 are OFF, the electromagnetic field is collapsed, energy from the collapsed field stored on suitable capacitor Cp1. The energy from coming and going of magnetic flux from embedded permanent magnets in main magnetic circuit store also on suitable capacitor Cp1. The voltage across Cp1 in series with B3 is about five-time higher than the voltage across B1+B2. With a predetermined timing for high-side ES3 and low-side ES4, high-voltage electric energy recharges batteries B1+B2 (second pulse) via an another magnetic circuit containing embedded permanent magnets.

Energy from secondary winding, related with increasing-decreasing magnetic field in primary winding stored on suitable capacitor Cs1, makes the voltage across Cs1+B3 about five-time higher than voltage across B1+B2. Then with a predetermined ON/OFF time for high-side ES5 and low-side ES6, high voltage electric energy charges the batteries B1+B2 (third pulse), via another magnetic circuit containing permanent magnets and again, there are more energy, stored on primary-, secondary-, sub-secondary capacitors free.

Select the operation voltage of Micro-Controller Unit - MCU -, or another instruments, in range of voltage across battery B3, accordingly, all energy supplied to MCU, to another instruments, from B1+B2, flow in battery B3- see triangle symbol in FIG. 14.

FIG .15 shows electric circuit of another aspect of the Tran-electromagnetic generator. The first high energy pulse, releases its potential energy in the primary winding of a magnetic circuit containing embedded permanent magnets, simultaneously, charge battery B3.

There are number of sub-secondary capacitors, stored electric energy with high voltage, free, after the first pulse.

Energy supply to the MCU, and possibly, another instruments, continuously charges battery. B3 (not drawn here for sake of clarity).

Then high voltage electric energy from secondary capacitor Cs1+B3-about five time higher than voltage across B1+B2 -, via electronic switch ES3 at high-side, at low/side electronic switch ES4, in a predetermined time, charges the batteries B1+B2 through another magnetic circuit containing embedded permanent magnets . After the second pulse, there are more energy stored on another primary-, secondary-, sub secondary capacitors, free.

High voltage electric energy, from collapsed magnetic field, after the first pulse, stored its electric energy on suitable capacitor Cp1, from Cp1+B3-with voltage about five-time higher than that from batteries B1+B2-, charges batteries B1+B2 in a predetermined time for electronic switches ES5, at high-side and electronic switch ES6, at low-side, through another magnetic circuit containing embedded permanent magnets. After third pulse, there are more energy, stored on another primary-, secondary-, sub secondary capacitors, free.

In turn ES7+ES8, ES9+ES10, ES11+ES12, ES13+ES14, total six times of using high voltage energy to charge batteries B1+B2.

The free energy stored on primary-, secondary-, sub secondary capacitors are used to charge the selected batteries.

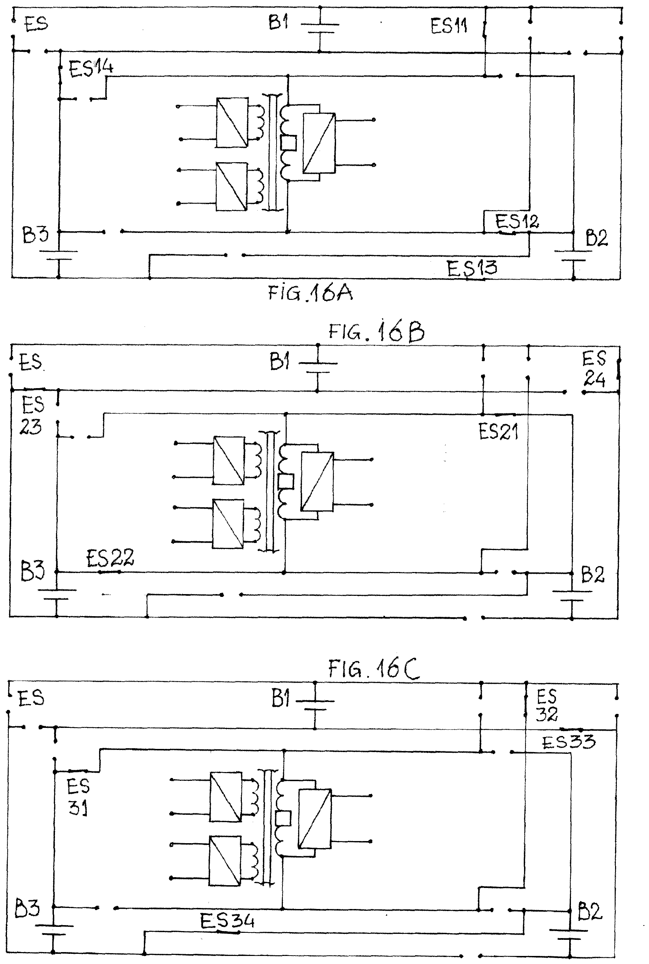

FIG. 16A - 16B - 16C show group of reusing high voltage energy from three identical power batteries with three magnetic circuits containing embedded permanent magnets. Only switches in operation are closed. None of primary-, secondary-, sub secondary energy are mentioned here. All electronic switches, preferably, no presence of intrinsic body diode.

FIG. 16A shows high voltage electric energy from battery B1+B3 via electronic switch ES13 and ES14 charge battery B2.

Battery B1 in series with battery B3 via electronic switches ES13 + ES14, then high-side electronic switch ES11 and low-side electronic switch ES12 are ON in a predetermined time to charge battery B2 through magnetic circuit containing embedded permanent magnets. After the operation time, all switches are OFF.

FIG. 16B shows high voltage electric energy from battery B2+B1 via electronic switches ES23 + ES24 charge battery B3.

Battery B2 in series with battery B1 via electronic switches ES23 + ES24, then high-side electronic switch ES21 and low-side electronic switch ES22 are ON in a predetermined time to charge battery B3 through another but identical magnetic circuit containing embedded permanent magnets. After the operation time all switches are OFF.

FIG. 16C shows high voltage electric energy from battery B3 + B2 via electronic ES33 + ES34 charges battery B1.

Battery B3 in series with battery B2 via electronic switches ES33 + ES34 then high -side electronic switch ES31 and low-side electronic switch are ON in a predetermined time to charge battery B1 through another, but identical magnetic circuit containing embedded permanent magnets. After the operation time, all electronic switches are OFF.

The electronic ES, at the left top-corner in each figure, can be combined with another switches to change the sequence of charging batteries.

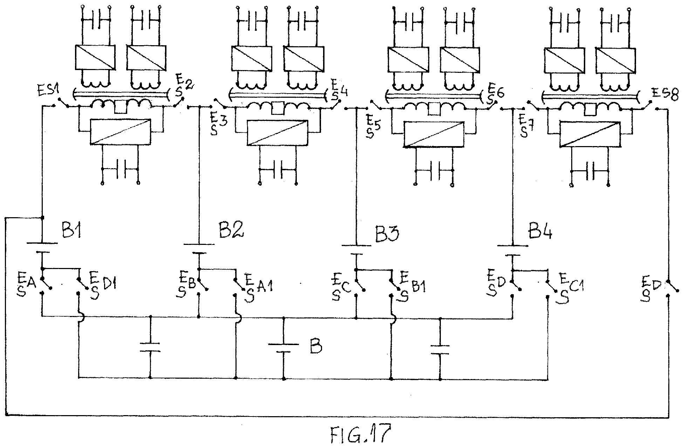

FIG. 17 shows the reusing of the used electric energy to energize primary coil of winding of magnetic circuit containing embedded permanent magnets. All electronic switches are preferably no intrinsic body diode. None of primary-, secondary-, sub-secondary elements are mention here.

Electronic switch ESA + electronic switch ESA1 are ON, then high voltage electric energy from battery B1 + B via electronic switch ES1 at high-side, electronic switch ES2 at low-side, charges the battery B2 through magnetic circuit containing embedded permanent magnets in a predetermined time. After a predetermined time, all switches are OFF.

In continuation, electronic switch ESB + electronic switch ESB1 are ON then high voltage electric energy from battery B2 + B, via electronic switch ES3 at high-side and electronic switch ES4 at low-side charges the battery B3 through another magnetic circuit containing permanent magnets in a predetermined time. After that all switches are OFF.

By turns, the first high voltage electric energy, with support from energy from battery B, flows from battery B1 to B2, B3, B4 and returns to B1.

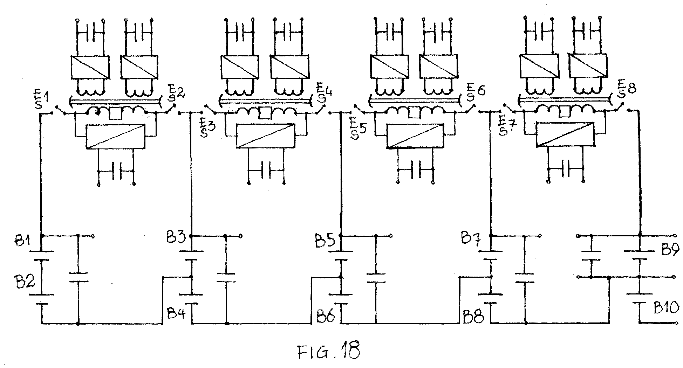

FIG. 18 shows the same process of reusing the used electric energy, just with electronic switches at high-side and low-side and two identical power batteries for every of magnetic circuit containing embedded permanent magnets. First time, high voltage electric energy from battery B1 + B2 via high-side electronic switch ES1, low-side electronic ES2, charges battery B3, through a magnetic circuit containing embedded permanent magnets, in a predetermined time.

The used electric energy, stored in battery B3 in series with battery B4, via electronic switch ES3, at high-side and electronic switch ES4 at low-side, charges battery B5 in a predetermined time, through another magnetic circuit containing embedded permanent magnets.

The same process goes further until the used electric energy flows into battery B9. If battery B9 and battery B10 is replaced by battery B1 and B2, the process is repeated. The capacitor, parallel with battery B9 has no role in this process.

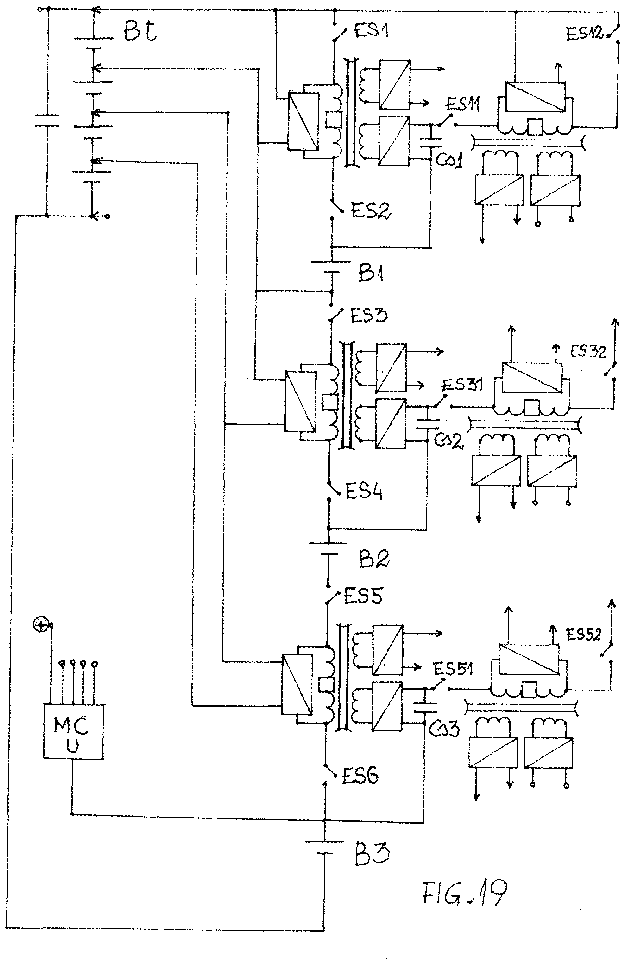

FIG. 19 shows a process that three magnetic circuits containing embedded permanent magnets wherein its primary winding can be energized at the same time. High voltage electric energy from battery Bt, via electronic switch ES1, through magnetic circuit containing permanent magnets, electronic switch ES2 battery B1, electronic switches ES3, through another magnetic circuit containing embedded permanent magnets, electronic switch ES4, battery B2, electronic switch ES5, another magnetic circuit containing permanent magnets, electronic switch ES6, charges battery B3, when all electronic switches are ON and OFF in a predetermined time.

Electric energy stored in battery B1 + Cs1, via electronic ES11 at high-side and electronic ES12 at low-side, through another magnetic circuit containing permanent magnets, charges battery Bt in a predetermined time.

The same process is repeated with battery B2, suitable capacitor Cs2, electronic switches ES31 + ES32 and with battery B3, suitable capacitor Cs3, electronic switches ES51 +ES52 respectively, to charge battery Bt or part of battery Bt.

Collapsed electric energy from each apart magnetic circuit can charge battery Bt or different level of voltages in battery Bt.

Depending on the operation voltage applied to the micro-controller unit MCU, electric energy supplied to the MCU can be stored in battery B3 .

**Claims**

1. Reusing the used electric energy via systems of batteries in cascade, magnetic circuit containing permanent magnets, suitable capacitors and electronic switches at high-side and low-side of the primary coil of winding in magnetic circuit containing embedded permanent magnets.

2. Harvesting electric energy from permanent magnets, when magnetic flux from permanent magnets is deflected by a changing magnetic field from primary coil of winding in magnetic circuit containing embedded permanent magnets.

3. Using the changing magnetic field from primary coil of winding to :

   - Induce an inductive voltage across the secondary coil of winding in magnetic circuit containing permanent magnets.
   - Deflect the magnetic flux from permanent magnets embedded in magnetic circuit by two methods :
   - Blocking the normal magnetic flux direction of permanent magnets.
   - Crossing the normal magnetic flux direction of permanent magnets.

4. The more high energy permanent magnets can be arranged in magnetic circuit, the more electric energy can be harvested from secondary coils of winding, from sub-secondary coils of winding.

5. Copper magnet wires can be replaced by soft magnetic material magnet wire or multi-strand magnet wires, combined from high-electric conductors and soft magnetic material magnet wires, or magnet wires, made from soft magnetic material wire, clad copper.

6. Application of Voltage-Doubler circuit or Center-Tapped circuit in electric circuits of primary -, secondary-, sub-secondary coils of winding to rectify electric current and to reduce 50% of (active, synchronous) diodes.

7. Application of auto-transformer winding in primary coil of winding to reduce the time of time-constant in primary coil of winding.

8. Electric energy supplied to electric instrument or apparatuses can be reused, provided that the operation voltage of them are suitable in range of cascade batteries.

9. Transferring electric energy at the desired level of voltage by building up a changing magnetic field in primary coil of winding in magnetic circuit containing embedded permanent magnets, harvesting all electric energy , derived from changing magnetic fields and store electric energy in suitable capacitors, if the supplied electric energy equals the demanding electric energy, than no need of battery.

10. With suitable capacitor, electric charge with high voltage, can charge a battery through a magnetic circuit containing permanent magnet.

11. Reducing the time of time-constant in primary coil of winding by setting extra resistance, extra transformer or auto-transformer in the winding of primary coil of winding.

FIG.1G

FIG.1F

FIG.1E

FIG.1D

FIG.1H

FIG.1J

FIG.1K

FIG.1A

FIG.1B

FIG.1C

FIG. 2A

FIG.2B

FIG.3A

FIG.3C

FIG.3C1

FIG.3B

FIG.4A

FIG.4A1

FIG. 4B

FIG. 4B1

AG

FIG. 4B3

FIG. 4B2

FIG. 4B4

EP 3 664 107 A1

FIG.4C                                                    SW

FIG. 4C1                                                  SW    PW    AG

AG

FIG. 4C2                          FIG. 4C3      AG    FiG 4C4

16

FIG. 5

FIG. 6

FIG. 6A

FIG.7

FIG.7A

FIG.7B

FIG.7C

FIG.7D

SW1

PW1

PW1

SW1

SW2

SW2

PW2

PW2

AG

AG

AG

AG

AG

SSW
AG
FIG. 8A

PW2
SW2
SW2
PW2
PW1
SW1
SW1
FIG. 8
PW1

AG
SSW
FIG. 8B

SSW    AG  SW1

PW1

SSW

SW1

PW1

FIG.9

SSW

AG

FIG.9A

SW2

AG

SW2

AG

SSW

FIG.9B

AG

SSW

FIG. 10

FIG. 10A

FIG. 10B

AG

PW

PW

SW

PW

PW

AG

SW

F11B

SSW

AG

FIG. 11C

SSW

AG

FIG. 11D

FIG. 11

FIG. 11A

AG

AG

FIG. 12

FIG. 12A

FIG. 12B

FIG. 12C

FIG. 12D

FIG.13

AG

SW

PW

PW

SW

SW

PW

PW

SW

AG

SSW

FIG.13A

FIG.14

Fig 5C

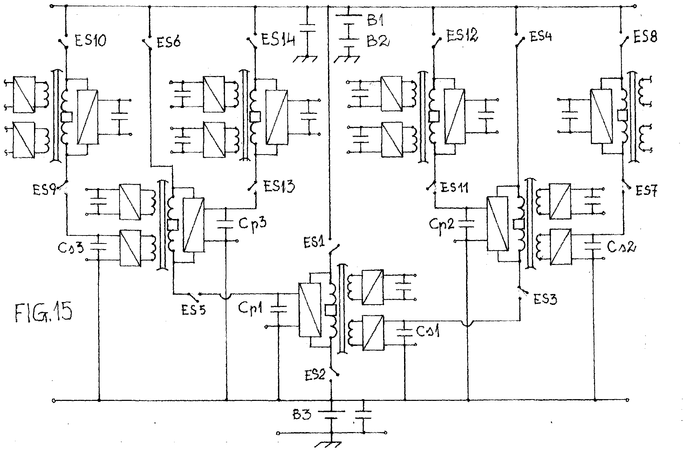

FIG.15

FIG. 16A

FIG. 16B

FIG. 16C

FIG.17

FIG. 18

FIG. 19

Europäisches
Patentamt

European
Patent Office

Office européen
des brevets

## EUROPEAN SEARCH REPORT

Application Number

EP 18 07 5016

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2009/112877 A1 (TRANICO) 17 September 2009 (2009-09-17) * the whole document * ----- | 1-11 | INV. H01F3/10 H01F30/06 H02K53/00 |
| X,D | US 2017/221627 A1 (TRAN ET AL) 3 August 2017 (2017-08-03) * the whole document * ----- | 1-11 | |

TECHNICAL FIELDS
SEARCHED (IPC)

H01F
H02K

The present search report has been drawn up for all claims

| Place of search | Date of completion of the search | Examiner |
|---|---|---|
| Munich | 20 May 2019 | Subke, Kai-Olaf |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 07 5016

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2019

| Patent document cited in search report | Publication date | Patent family member(s) | Publication date |
|---|---|---|---|
| WO 2009112877 A1 | 17-09-2009 | US 2010264730 A1<br>WO 2009112877 A1 | 21-10-2010<br>17-09-2009 |
| US 2017221627 A1 | 03-08-2017 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 835654 A
- WO 2009112877 A
- WO 200800796 W

- US 20170221627 A
- EP 2978119 A1
- US 20170221627 A1